# FASCICULE DE BREVET EUROPEEN

(11) **EP 3 275 605 B1**
(45) Date de publication et mention de la délivrance du brevet: **06.03.2019**
(21) Numéro de dépôt: 17183660.4
(22) Date de dépôt: 28.07.2017
(51) Int. Cl.: B25J 9/16, B25J 9/04, G05B 19/414, G05B 19/4103, B25J 19/06

(54) **PROCÉDÉ DE COMMANDE D'UN ROBOT À USAGE INDUSTRIEL**
STEUERVERFAHREN EINES ROBOTERS FÜR DEN INDUSTRIELLEN EINSATZ
METHOD FOR COMMANDING AN INDUSTRIAL ROBOT

(30) Priorité: 29.07.2016 FR 1657385
(43) Date de publication de la demande: 31.01.2018
(73) Titulaire: Staubli Faverges, 74210 Faverges (FR)
(72) Inventeur: ALLARDICE, Etienne, 73400 Ugine (FR); DELOR, Stéphane, 74000 Annecy (FR)
(74) Mandataire: Lavoix

(56) Documents cités:
- DE-A1-102004 026 827
- FR-A1- 3 019 953

## Description

L'invention concerne un robot à usage industriel ainsi qu'un procédé de commande d'un tel robot à usage industriel. L'invention concerne plus particulièrement la commande des robots industriels comportant un bras de robot articulé à plusieurs axes.

On connait des robots à usage industriel de type bras de robot, qui sont destinés à être utilisés dans des environnements en présence d'opérateurs humains. Le document FR 3 019 953 A1 divulgue un tel robot. Pour des raisons de sécurité, il est souhaitable que le robot puisse envoyer des signaux de communication, par exemple un son audible, à destination d'un opérateur humain se trouvant à proximité du bras de robot. Cela permet, par exemple, de signaler à l'opérateur que le robot est en attente d'une action particulière de l'opérateur, ou encore de le prévenir qu'il ne doit pas se situer dans une zone d'espace particulière à proximité du robot car le bras de robot va se déplacer dans cette zone. Typiquement, l'émission d'un tel son audible est réalisée au moyen d'un transducteur dédié qui est raccordé à une unité de commande du robot.

Cette solution ne donne cependant pas entière satisfaction. Un inconvénient est qu'elle ne permet pas de garantir que le son audible soit émis à destination de l'opérateur. Par exemple, il est possible que, bien qu'un ordre d'émission du signal sonore soit délivré par l'unité de commande, aucun son audible ne soit en fait émis par le transducteur, par exemple en raison d'une défaillance du transducteur ou d'une défaillance d'une liaison de données entre le transducteur et l'unité de commande. Il en résulte donc un risque de sécurité pour l'opérateur.

C'est à ces inconvénients qu'entend plus particulièrement remédier l'invention en proposant un procédé de commande d'un robot à usage industriel ainsi qu'un robot à usage industriel présentant une sécurité de fonctionnement améliorée, dans lequel un son audible est capable d'être délivré de façon fiable à un opérateur travaillant à proximité du robot.

A cet effet, l'invention concerne un procédé de commande d'un robot à usage industriel comprenant un bras de robot mobile pourvu d'au moins un moteur électrique adapté pour mouvoir ce bras de robot et pourvu d'un contrôleur de robot comportant une unité centrale et d'un contrôleur d'axe, ce procédé comportant des étapes :
a) d'exécution, par l'unité centrale, d'un programme de commande du bras de robot et, en réponse, de calcul et d'envoi de consignes de position du bras de robot ;
b) de génération de tensions d'alimentation dudit moteur par le contrôleur d'axe en fonction des consignes de position calculées, en mettant en oeuvre des régulateurs en cascade comportant au moins un point d'entrée recevant un signal d'entrée ;
c) de commande dudit moteur avec les tensions d'alimentation générées.
Lors de l'étape b), un signal d'excitation sonore est superposé, par le contrôleur de robot, avec le signal d'entrée d'un des régulateurs pour former un signal composite, les tensions d'alimentation étant générées en fonction du signal composite.

Grâce à l'invention, du fait que les tensions d'alimentation du moteur du robot sont générées en fonction du signal composite comportant à la fois le signal d'entrée ainsi qu'un signal d'excitation sonore, l'émission du signal sonore est indissociable du fonctionnement du moteur. En d'autres termes, une fois que le signal d'excitation sonore est superposé avec le signal d'entrée au sein de l'un des régulateurs, alors les tensions d'alimentation ainsi générées par le contrôleur d'axe commandent le mouvement du moteur pour déplacer le bras de robot et, en outre, font vibrer mécaniquement le moteur d'une façon spécifique correspondant au signal d'excitation sonore. Grâce à ces vibrations, un son audible perceptible par un opérateur se trouvant à proximité du robot est émis. Le son est apte à être émis dès que le robot est mis sous tension. Le risque que le moteur soit mis en fonctionnement sans que le son puisse être émis à destination de l'opérateur s'en trouve réduit, ce qui renforce la sécurité de fonctionnement du robot.

Selon des aspects avantageux mais non obligatoires de l'invention, un tel procédé de commande peut incorporer une ou plusieurs des caractéristiques suivantes, prises dans toute combinaison technique admissible :
- Le procédé comporte en outre, préalablement à l'étape b), une étape a') de génération d'un ordre de superposer le signal d'excitation sonore au signal d'entrée d'un des régulateurs.
- Le procédé comporte une étape préalable z) d'acquisition, par l'unité de commande, d'un fichier informatique d'excitation sonore à l'intérieur duquel le signal d'excitation sonore est enregistré et, lors de l'étape b), le signal d'excitation sonore est automatiquement extrait hors du fichier informatique d'excitation sonore.
- Lors de l'étape z), le fichier informatique d'excitation sonore acquis est stocké dans une mémoire du contrôleur d'axe et lors de l'étape b), le signal d'excitation sonore est superposé avec le signal d'entrée du régulateur de courant du contrôleur d'axe.
- Lors de l'étape z), le fichier informatique d'excitation sonore acquis est stocké dans une mémoire de l'unité centrale et lors de l'étape b), le signal d'excitation sonore est superposé avec le signal d'entrée du régulateur de position du contrôleur d'axe.
- Le procédé comporte en outre une étape préalable y) de génération automatique du fichier informatique d'excitation sonore à partir d'un fichier son source.
- L'étape y) de génération du fichier d'excitation sonore comporte une opération automatique de décodage numérique du fichier son source vers un format prédéfini pour former le fichier informatique d'excitation sonore.
- L'étape y) de génération du fichier informatique d'excitation sonore comporte une opération automatique d'échantillonnage du fichier son source à une fréquence d'échantillonnage égale à la fréquence du régulateur à l'entrée duquel le signal d'excitation sonore est destiné à être superposé.
- L'étape y) de génération du fichier informatique d'excitation sonore comporte une opération de correction automatique de l'amplitude du signal d'excitation sonore, pour adapter l'amplitude maximale de la valeur absolue du signal d'excitation sonore à des spécifications du point d'entrée recevant le signal d'entrée.
- L'étape y) de génération du fichier informatique d'excitation sonore comporte une opération de correction automatique de l'amplitude du signal d'excitation sonore, pour que l'amplitude maximale de la valeur absolue du signal d'excitation sonore soit inférieure ou égale à 50% ou à 30% de l'amplitude maximale du signal d'entrée.
- Lors de l'étape c), le son audible est émis continument ou de façon répétée au cours du temps et en ce que le procédé comporte également des étapes :
   d) de réception d'une commande d'acquittement,
   d') d'interruption de l'émission du son audible, par l'unité de contrôle du robot, une fois que la commande d'acquittement a été reçue.

Selon un autre aspect, l'invention concerne un robot à usage industriel comportant :
- un bras de robot mobile pourvu d'au moins un moteur électrique adapté pour mouvoir ce bras de robot et
- un contrôleur de robot comportant :
   - une unité centrale, adaptée pour exécuter un programme de commande du bras de robot et pour, en réponse, calculer et envoyer des consignes de position ;
   - un contrôleur d'axe, adapté pour générer des tensions d'alimentation dudit moteur en fonction des consignes de position calculées, en mettant en oeuvre des régulateurs en cascade comportant au moins un point d'entrée recevant un signal d'entrée.
Le contrôleur de robot est configuré pour, lors de la génération des tensions d'alimentation, superposer un signal d'excitation sonore avec le signal d'entrée d'un des régulateurs pour former un signal composite, les tensions d'alimentation étant générées en fonction du signal composite.

L'invention sera mieux comprise et d'autres avantages de celle-ci apparaitront plus clairement à la lumière de la description qui va suivre, de deux modes de réalisation d'un procédé de commande, donnée uniquement à titre d'exemple et faite en référence aux dessins annexés dans lesquels :
- la figure 1 représente schématiquement un robot à usage industriel conforme à l'invention ;
- la figure 2 représente un schéma de principe illustrant une portion d'un contrôleur de robot de la figure 1 pour piloter un des moteurs du bras de robot de la figure 1 ;
- la figure 3 représente schématiquement l'évolution, en fonction du temps, de l'amplitude d'un signal d'entrée d'un régulateur d'un contrôleur d'axe appartenant au contrôleur de robot de la figure 2 ;
- la figure 4 représente schématiquement l'évolution, en fonction du temps, de l'amplitude d'un signal d'excitation sonore ;
- la figure 5 illustre schématiquement l'évolution, en fonction du temps, de l'amplitude d'un signal composite formé en superposant le signal d'excitation sonore de la figure 4 au signal d'entrée de la figure 3 ;
- la figure 6 est un ordinogramme d'un procédé de commande selon l'invention pour commander le robot de la figure 1.

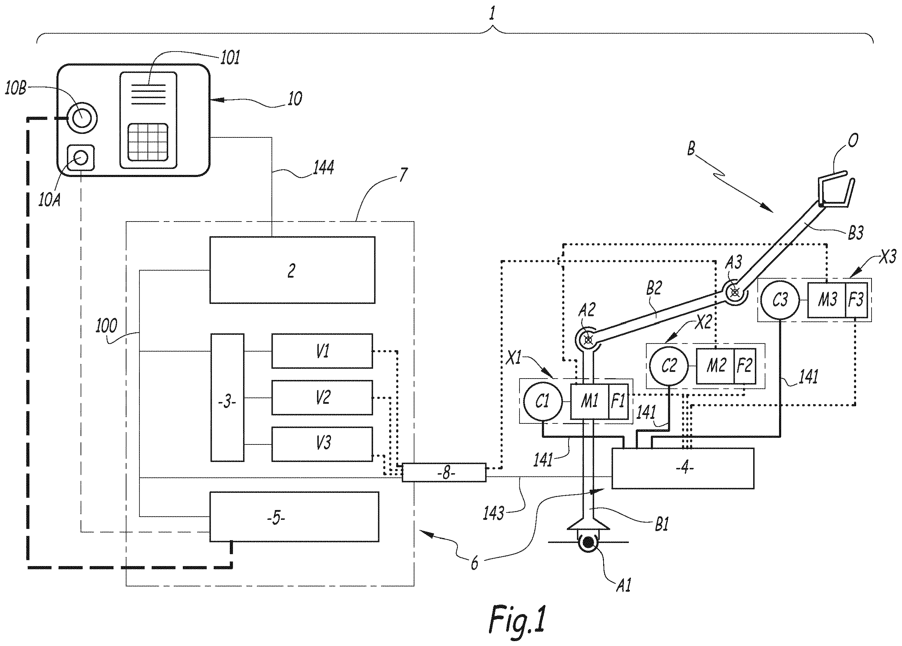

La figure 1 représente un robot 1 à usage industriel comportant un bras de robot B articulé. Dans cet exemple, le robot 1 est un robot de type trois axes à trois degrés de liberté. En variante, le robot 1 peut être différent. Par exemple, il peut s'agir d'un robot à six axes ou d'un robot de type SCARA à quatre axes.

Le bras de robot B comporte plusieurs parties mobiles qui sont articulées deux à deux par des liaisons pivots. Une extrémité distale du bras de robot B est pourvue d'un outil O commandable. Une extrémité proximale du bras de robot B est articulée à une armature fixe du robot 1.

Dans cet exemple, le bras de robot B comporte trois parties mobiles B1, B2 et B3, ici chacune de forme rectiligne. On note « A1 » l'axe géométrique d'articulation entre la partie mobile B1 et l'armature fixe, « A2 » l'axe géométrique d'articulation entre les parties mobiles B1 et B2 et « A3 » l'axe géométrique d'articulation entre les parties mobiles B2 et B3.

Le robot 1 comporte des actionneurs commandables X1, X2 et X3 adaptés pour déplacer les parties mobiles B1, B2 et B3 les unes par rapport aux autres, de manière à déplacer l'outil O dans l'espace. Pour ce faire, les actionneurs X1, X2 et X3 sont placés au niveau des articulations du bras de robot B.

Chacun des actionneurs X1, X2 et X3 comporte un moteur électrique, noté respectivement M1, M2 et M3. Les moteurs M1, M2 et M3 sont chacun apte à déplacer les parties mobiles B1, B2 et B3, respectivement, autour de l'axe géométrique d'articulation A1, A2 et A3 correspondant. Dans cet exemple, les moteurs M1, M2 et M3 sont des moteurs électriques synchrones triphasés.

A la figure 1, pour des raisons de clarté, les moteurs M1, M2 et M3 sont illustrés à l'extérieur du bras de robot B. En pratique, cependant, les moteurs M1, M2 et M3 sont disposés au niveau des axes d'articulation A1, A2 et A3, respectivement, de sorte à exercer un couple en rotation autour de ces axes d'articulation A1, A2 et A3 pour déplacer les parties mobiles B1, B2 et B3.

Le bras de robot B comporte en outre des capteurs de position, ou codeurs, C1, C2 et C3 qui sont adaptés pour mesurer la position relative de chacune des parties mobiles B1, B2 et B3 dans l'espace, ici pour mesurer leur position angulaire autour des axes géométriques d'articulation A1, A2 et A3. Chaque codeur C1, C2 et C3 fournit ainsi une information de mouvement correspondant à une position de la partie mobile à laquelle il est associé. Les codeurs C1, C2 et C3 sont ici respectivement associés aux moteurs M1, M2 et M3 au sein des actionneurs X1, X2 et X3.

Avantageusement, le bras de robot B comporte des freins électromagnétiques F1, F2 et F3 commandables qui sont adaptés pour inhiber ou, sélectivement, autoriser un mouvement des parties mobiles B1, B2 et B3. Dans cet exemple, les freins électromagnétiques F1, F2 et F3 sont respectivement associés aux moteurs M1, M2 et M3 au sein des actionneurs X1, X2 et X3. De tels freins électromagnétiques sont bien connus de l'homme du métier et ne sont pas décrits ici plus en détail. En variante, les freins électromagnétiques F1, F2 et F3 peuvent être omis.

Le robot 1 comporte également un contrôleur de robot 6 adapté pour contrôler le fonctionnement des actionneurs X1, X2 et X3 de manière à déplacer sélectivement le bras de robot B dans l'espace selon un programme de commande prédéfini. En pratique, commander l'actionneur X1, X2 ou X3 revient à commander le moteur correspondant M1, M2 et M3, respectivement.

A cet effet, le contrôleur de robot 6 comporte une unité centrale 2, une carte électronique de contrôle de mouvement 3, une carte électronique de sécurité 5, une carte électronique d'interfaçage 4, ainsi que des variateurs de puissance V1, V2 et V3.

L'unité centrale 2, la carte de contrôle 3, les variateurs de puissance V1, V2 et V3 et la carte de sécurité 5 sont ici regroupées à l'intérieur d'une armoire 7. La carte d'interfaçage 4 est placée au pied du bras de robot B en dehors de l'armoire 7.

En variante, la carte électronique de contrôle de mouvement 3, la carte électronique de sécurité 5 et/ou la carte électronique d'interfaçage 4 peuvent être remplacées par des modules logiciels de fonctionnalité équivalente exécutés par l'unité centrale 2.

Le robot 1 comporte également un boîtier de commande manuelle 10 pourvu d'une interface de communication 101, par exemple un clavier et un écran d'affichage, qui permet à un opérateur de transmettre des ordres de commande au robot 1. Le boîtier de commande manuelle 10 est raccordé à l'unité centrale 2, au moyen d'une liaison de données 144.

L'unité centrale 2, la carte de contrôle 3 et la carte de sécurité 5 sont raccordées entre elles par un bus de données 100. Le bus de données 100 est ici un bus de terrain, par exemple conforme au protocole de communications EtherCat.

L'unité centrale 2 a pour fonction d'exécuter des programmes de commande du robot 1. L'unité centrale 2 est programmée pour déterminer, au moyen d'un modèle cinématique prédéfini associé au bras robot B, les positions relatives que doivent prendre les parties mobiles B1, B2 et B3 du bras de robot au cours du temps pour satisfaire un programme de commande spécifié, dans le but de déplacer l'outil O dans l'espace au cours du temps suivant une trajectoire prédéfinie conforme au programme de commande. En fonction de cette détermination, l'unité centrale 2 est programmée pour calculer et émettre des consignes de position à atteindre pour chacun des moteurs M1, M2, M3. Ces consignes de position sont ensuite délivrées à destination de la carte de contrôle 3, ici par l'intermédiaire du bus de données 100.

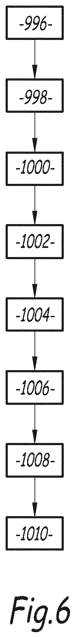

A cet effet, l'unité centrale 2 comporte une unité de calcul, et une mémoire 20. La mémoire interne 20 comporte des instructions pour mettre en oeuvre le procédé de la figure 6 lorsque ces instructions sont exécutées par le calculateur électronique de l'unité centrale 2. L'association de la carte de contrôle 3 avec chacun des variateurs de puissance V1, V2 ou V3, respectivement, forme un contrôleur d'axe du bras de robot B pour l'axe d'articulationA1, A2 ou A3 correspondant. Un tel contrôleur d'axe permet d'assurer un fonctionnement régulé du moteur M1, M2 et M3 auquel il est associé, à partir des consignes de position calculées et envoyées par l'unité centrale 2.

Dans cet exemple, on note 3' le contrôleur d'axe associé au moteur M1, correspondant à l'association de la carte de contrôle 3 et du variateur V1.

La carte de contrôle 3 a pour fonction d'élaborer des consignes de commande pour chacun des variateurs V1, V2 et V3 de manière à piloter les moteurs de façon régulée, en fonction des consignes de position moteur reçues depuis l'unité centrale 2 et en fonction des informations de mouvement fournies par les codeurs C1, C2 et C3.

Les variateurs V1, V2 et V3 assurent l'alimentation électrique des phases des moteurs, respectivement, M1, M2 et M3, ici grâce à un circuit électrique en pont comportant une branche supérieure, regroupant trois interrupteurs commutables reliés chacun à un bus positif et à une phase d'un des moteurs M1, M2 et M3 correspondants, et une branche inférieure, regroupant trois interrupteurs commutables reliés chacun à un bus négatif et à une phase d'un des moteurs M1, M2 et M3 correspondants.

Les variateurs V1, V2 et V3 génèrent des tensions d'alimentation à destination des moteurs, respectivement, M1, M2 et M3, en fonction de consignes de commande fournies par la carte de contrôle 3.

La carte de sécurité 5, ou contrôleur de sécurité, est destinée à assurer un fonctionnement sécurisé du robot 1. En particulier, la carte de sécurité 5 est configurée pour exécuter des programmes de surveillance du déplacement du bras de robot et au cours du temps de commander l'arrêt du robot lors de la détection d'une défaillance ou d'une anomalie. Ici, comme illustré à la figure 1, la carte de sécurité 5 est connectée au bus de données 100 de manière à recevoir des informations de mouvement du bras de robot B issues des capteurs C1, C2 et C3.

Dans cet exemple, le boîtier de commande manuel 10 comporte un bouton d'arrêt d'urgence 10A et un bouton de test d'homme mort 10B aussi connu sous le nom de veille active ou de « dead man's switch » en langue anglaise. Les boutons 10A et 10B sont directement câblés au moyen d'une liaison filaire à la carte de sécurité 5 pour permettre à un opérateur du robot 1 d'interrompre le fonctionnement en cas d'urgence.

La carte d'interfaçage 4 assure une l'interface pour l'échange d'informations entre le contrôleur de robot 6 et le bras de robot B. A cet effet, la carte d'interfaçage 4 comporte un module de traitement de signaux programmé pour collecter des signaux de mesure émis par les capteurs C1, C2 et C3 et pour les conditionner de manière à ce qu'ils soient exploitables par les autres constituants du contrôleur de robot 6. Par exemple, la carte d'interfaçage 4 est adaptée pour conditionner des signaux de mesure analogiques émis par les capteurs C1, C2 et C3, au moyen d'un convertisseur analogique-numérique, puis pour transmettre, vers le bus de données 100, des informations relatives à ces signaux, sous une forme compatible avec le protocole EtherCat.

La carte d'interfaçage 4 est ici raccordée à chacun des codeurs C1, C2 et C3 au moyen d'une liaison de données 141, par exemple conforme au protocole « EnDat » développé par la société HEIDENHAIN.

La carte d'interfaçage 4 est raccordée au bus 100 par l'intermédiaire d'une liaison de données 143. L'armoire 7 comporte un câble 8 permettant passage des liaisons de données et des liaisons de puissance entre l'armoire 7 et le bras de robot B.

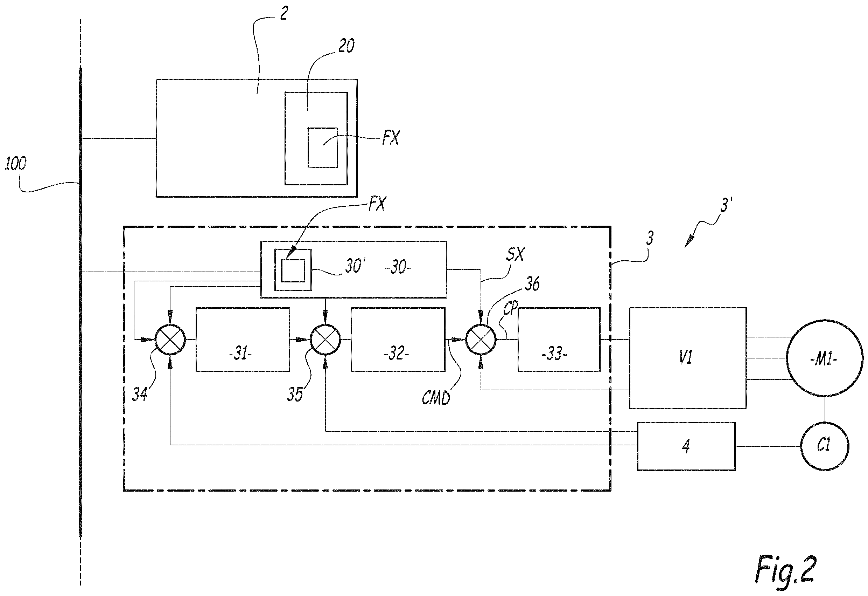

La figure 2 représente plus en détail la carte de contrôle 3.

Pour simplifier la figure 2, les connexions aux moteurs M2 et M3 n'y sont pas illustrées. En pratique, toutefois, la carte 3 est apte à commander les moteurs M1, M2 et M3 des actionneurs X1, X2 et X3. Tout ce qui est décrit en référence à la commande du moteur M1 est donc transposable aux moteurs M2 et M3.

En variante, le contrôleur de robot 6 comporte une carte de contrôle 3 dédiée à chacun des actionneurs X1, X2 et X3. Dans ce cas, chacune de ces cartes de contrôle est raccordée à un seul variateur de puissance V1, V2, V3 correspondant à cet actionneur et au bus de données 100.

La carte de contrôle 3 comporte une unité de calcul 30 pourvue d'une mémoire 30'. La carte de contrôle 3 comporte également des régulateurs en cascade pour implémenter des boucles de commande du moteur M1 imbriquées entre elles.

Plus précisément, la carte de contrôle 3 comporte ici un régulateur de position 31, un régulateur de vitesse 32 et régulateur de courant 33 en cascade et qui sont pourvus de points d'entrée, respectivement 34, 35 et 36. Les points d'entrée 34, 35 et 36 sont ici des unités de sommation.

L'unité centrale 2 génère une consigne de position et l'envoie à l'unité de calcul 30. Le régulateur de position 31 reçoit, sur son point d'entrée 34, cette consigne de position comme signal d'entrée depuis l'unité de calcul 30 et génère, en réponse, une consigne de vitesse. Le régulateur de vitesse 32 reçoit, comme signal d'entrée, cette consigne de vitesse sur son point d'entrée 35 et génère, en réponse, une consigne de courant. Enfin, le régulateur de courant 33 reçoit, comme signal d'entrée, cette consigne de courant sur son point d'entrée 36 et génère, en réponse, une consigne de commande qui est fournie au variateur V1 pour générer les tensions d'alimentation du moteur M1.

Chaque régulateur 31, 32 et 33 assure une régulation de la commande qu'elle génère en fonction d'informations de retour, par exemple au moyen d'une boucle de rétroaction assurée au moyen d'un régulateur de type PID.

Dans cet exemple, les régulateurs 31 et 32 reçoivent des informations de mouvement de la part du codeur C1 sur leurs points d'entrée, respectivement, 34 et 35. Le régulateur de courant 33 reçoit des informations de courant de la part du variateur V1 sur son point d'entrée 36.

Chaque régulateur associé à son point d'entrée et à un circuit de conditionnement de l'information de retour correspondante, ici du codeur C1 ou du variateur V1, constitue une boucle de régulation. La boucle de régulation de courant est imbriquée dans la boucle de régulation de vitesse, elle-même imbriquée dans la boucle de régulation de position.

Les régulations sont réalisées de façon répétée au cours du temps avec un cadencement à une fréquence prédéfinie. En d'autres termes, chaque régulateur 31, 32 et 33 actualise, de façon répétée avec la fréquence prédéfinie, la valeur qu'elle génère en sortie, en fonction des valeurs des signaux qu'elle reçoit en entrée.

Le fonctionnement des régulateurs 31, 32 et 33 est cadencé de façon croissante, c'est-à-dire que la fréquence de cadencement du régulateur de courant 33 est plus élevée que celle du régulateur de vitesse 32, elle-même plus élevée que celle du régulateur de position 31.

Dans cet exemple, la boucle de contrôle de position est cadencée avec une fréquence fixe de 1kHz, la boucle de contrôle de vitesse est cadencée avec une fréquence fixe comprise entre 2kHz et 5kHz, et la boucle de contrôle de courant est cadencée avec une fréquence fixe comprise entre 8kHz et 15kHz.

Le robot 1 est en outre configuré pour émettre un son audible à destination d'un opérateur situé à proximité du bras de robot B. Par « son audible », on désigne ici un son dont les propriétés acoustiques sont adaptés pour que le son soit perçu par une oreille humaine normale dans un environnement du robot 1 lors de son fonctionnement. A titre d'exemple, le son audible présente ici des fréquences comprises entre 20Hz et 20kHz et présente une pression acoustique supérieure à 50dB. Avantageusement, le son audible est différent du bruit généré par le fonctionnement normal d'un moteur M1, M2 ou M3. Par exemple, le son audible correspond à une note musicale émise de façon continue. En variante, ce son audible est différent. Il peut notamment s'agir d'un message vocal préenregistré ou généré par un module de synthèse vocale, par exemple embarqué à bord du contrôleur de robot 6.

Ce son audible est généré à partir d'un signal d'excitation sonore SX correspondant. Par « correspondant », on entend ici que le signal sonore est apte à être converti vers le son audible. Dans cet exemple, cette conversion est réalisée par les moteurs M1, M2 et/ou M3.

A cet effet, le contrôleur de robot 6 est configuré pour superposer le signal d'excitation sonore SX avec le signal d'entrée CMD d'un des régulateurs 31, 32, 33, pour former le signal composite CP, ce signal composite étant alors fourni en entrée du régulateur 31, 32, 33 correspondant.

De cette manière, les consignes de commande fournies au variateur de puissance V1, et donc les tensions d'alimentation générées puis fournies au moteur M1, tiennent compte du signal d'excitation sonore SX. Ainsi, en réponse, le moteur M1 émet un son audible correspondant au signal d'excitation sonore SX. Le son audible est émis du fait des vibrations du moteur M1. De plus, la structure mécanique formant le robot 1 est également sujette à des résonances qui amplifient le son audible généré par le moteur M1.

Par exemple, ce signal d'excitation sonore SX est enregistré sous une forme numérique échantillonnée dans un fichier informatique d'excitation sonore FX.

Dans un premier mode de réalisation, le fichier informatique d'excitation sonore FX est stocké dans la mémoire interne 30' de la carte de contrôle 3. La carte 3 est configurée pour superposer ce signal d'excitation sonore SX au signal d'entrée CMD sur le point d'entrée 36 du régulateur de courant 33.

Ainsi, le son à émettre peut être facilement modifié en accédant à la mémoire 30'. De plus, la fréquence de cadencement du régulateur de courant 33 étant élevée, on garantit une bonne restitution sonore des fréquences correspondant au spectre audible d'un opérateur humain adulte.

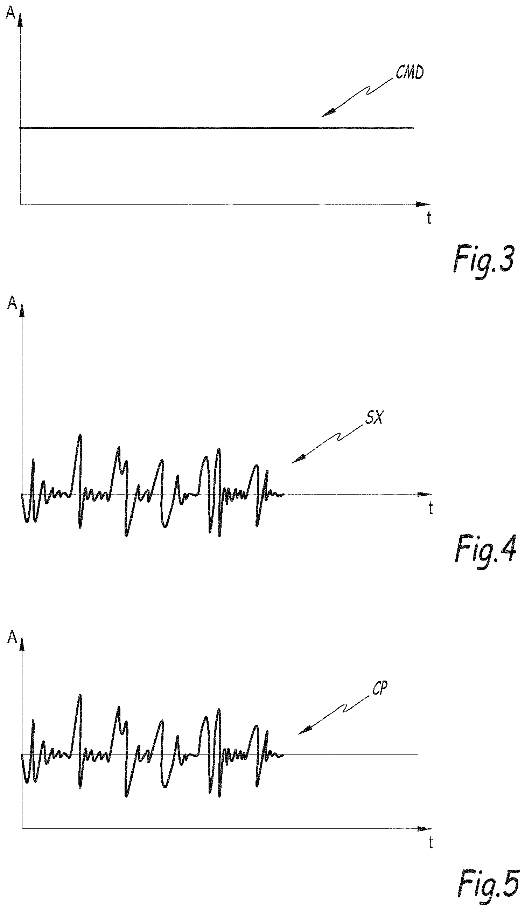

Les figures 3, 4 et 5 représentent plus en détail un exemple d'une telle superposition. La figure 3 illustre l'évolution, en fonction du temps t, de l'amplitude du signal d'entrée CMD reçu en entrée du point d'entrée 36 du régulateur de courant 33. Dans cet exemple, ce signal d'entrée CMD est maintenu égal à une valeur constante, de sorte que le contrôleur d'axe 3' commande au moteur M1 le maintien d'un couple constant, de manière à maintenir la partie mobile B1 dans une position prédéfinie.

La figure 4 représente l'évolution de l'amplitude, en fonction du temps t, du signal d'excitation sonore SX. La figure 5 représente l'évolution, en fonction du temps t, du signal composite CP formé par la superposition du signal d'excitation sonore SX avec le signal d'entrée CMD. Les amplitudes A sont ici indiquées en unités arbitraires. L'émission du son audible n'implique pas nécessairement que le bras de robot B soit en mouvement. Elle peut se produire alors que le bras de robot B est immobile et le moteur M1 sous tension.

Un exemple de fonctionnement du procédé de commande selon ce premier mode de réalisation est maintenant décrit en référence à l'ordinogramme de la figure 6 et à l'aide des figures 1 à 5.

Initialement, le robot 1 est fourni avec son bras de robot B dans une configuration donnée. Le fichier informatique d'excitation sonore FX est préalablement stocké à l'intérieur de la mémoire 30', sous la forme d'un fichier numérique échantillonné.

Par exemple, lors d'une étape préalable 998, le fichier informatique d'excitation sonore FX est acquis, par exemple depuis un média extérieur tel qu'une clé USB connectée au boîtier de commande manuel 10, ou encore auprès d'un serveur informatique distant au travers d'une connexion réseau. Ce fichier informatique d'excitation sonore FX est ensuite enregistré dans la mémoire 30'.

Lors d'une étape 1000, un programme de commande du bras de robot B est exécuté par l'unité centrale 2, par exemple en réponse à une action d'un opérateur du robot 1 sur l'interface homme-machine 101.

Par exemple, le bras de robot B est destiné à suivre une trajectoire particulière au cours du temps, en déplaçant relativement l'une par rapport à l'autre les parties mobiles B1, B2 et B3 du bras de robot B. Ce faisant, il est par exemple nécessaire d'émettre, à des points spécifiques de cette trajectoire, un son audible à destination d'un opérateur se trouvant à proximité du bras de robot B, par exemple lorsque le bras de robot B atteint une position prédéterminée, ou pour prévenir de l'imminence d'une mise en mouvement du bras de robot B, ou encore dans l'attente de la réalisation d'une action extérieure au robot 1, telle qu'une interaction avec un opérateur du robot 1.

L'unité centrale 2 calcule alors des consignes de position du bras de robot B et les envoie au contrôleur d'axe 3'.

Parallèlement, lors d'une étape 1002, l'unité de contrôle 6 génère en outre au moins un ordre de superposer le signal d'excitation sonore SX pour émettre le son et transmet cet ordre au contrôleur d'axe 3'. Cette génération est ici réalisée automatiquement, en fonction du programme de commande exécuté. Elle résulte de l'interprétation d'une instruction spécifique du programme du bras de robot B ou d'une commande saisie sur le boîtier de commande manuel 10. L'émission du son est ainsi commandée de façon intentionnelle, et notamment est associée à la réalisation de certaines conditions du programme de commande. En variante, l'ordre de superposer le signal d'excitation sonore SX peut être issu de l'exécution d'un programme de fond par l'unité centrale 2 en parallèle de l'exécution du programme du commande du bras de robot B, comme par exemple un programme de surveillance de la température des moteurs dont le but serait d'avertir l'utilisateur du dépassement d'un seuil de température déterminé.

Ensuite, lors d'une étape 1004, le contrôleur d'axe 3' reçoit les consignes de position calculées par l'unité centrale et génère les tensions d'alimentation du moteur M1 en conséquence. Lors de cette étape 1004, le contrôleur d'axe reçoit également l'ordre de superposer le signal d'excitation sonore SX au signal d'entrée CMD.

Alors, l'unité de calcul 30 extrait automatiquement le signal d'excitation sonore SX hors du fichier informatique d'excitation sonore FX contenu dans la mémoire 30' et injecte ce signal d'excitation sonore SX dans le point d'entrée 36 du régulateur de courant 33 pour le superposer au signal d'entrée CMD de ce régulateur de courant 33. Cette superposition est réalisée en envoyant, à chaque cycle du cadencement de la boucle de contrôle de courant, une valeur échantillonnée du signal d'excitation SX dans le point d'entrée 36.

Le régulateur de courant 33 reçoit alors le signal composite CP en entrée. Elle génère ensuite les consignes de commande à destination du variateur de puissance V1, en fonction du signal de composite CP. Le variateur de puissance V1 génère en réponse les tensions d'alimentation du moteur M1.

Ensuite, lors d'une étape 1006, le contrôleur d'axe 3' envoie les tensions d'alimentation correspondantes au moteur M1, pour le commander ce moteur M1 et le mettre en mouvement et, simultanément, générer le son correspondant au signal d'excitation sonore SX.

Ainsi, l'émission du son audible à destination de l'opérateur est indissociable de la capacité à fonctionner des actionneurs du bras de robot. Cela réduit le risque que le moteur se mette à fonctionner sans que le son audible n'ait pu être émis. La sécurité de fonctionnement du robot 1 est ainsi améliorée.

Cette sécurité est ici renforcée par le fait que le pilotage des moteurs M1, M2 et M3 du bras de robot B est réalisée de façon redondante. En effet, les constituants du robot 1 sont avantageusement conformes à la norme de sécurité EN 13849-A. De plus, toute défaillance du pilotage des moteurs M1, M2 et M3 est automatiquement détectée par la carte de sécurité 5, par l'unité centrale 2 ou par le contrôleur d'axe 3'.

Dans cet exemple, pour simplifier, seule l'alimentation du moteur M1 est décrite en détail. En pratique, il est possible d'émettre un son également au moyen des moteurs M2 et/ou M3. Ainsi, tout ce qui est décrit en référence au moteur M1 et au contrôleur d'axe 3' s'applique aux moteurs M2 et M3 et à leur contrôleur d'axe correspondant.

Préférentiellement, le même signal d'excitation sonore SX est utilisé pour chacun des moteurs M1, M2 et M3. Toutefois, il est possible d'utiliser un signal d'excitation sonore spécifique à chacun des moteurs M1, M2 et M3. Par exemple, la carte de contrôle 3 sélectionne automatiquement un signal d'excitation sonore SX adéquat.

A titre d'exemple, dans le cas d'un robot industriel à six axes, l'actionneur qui commande l'articulation entre le bras de robot et l'armature fixe est utilisé de façon préférentielle, car il est apte à délivrer une puissance importante et est fixé à des éléments de structure de taille importante, ce qui permet une meilleure restitution sonore du son audible.

Avantageusement, lors de l'étape 1006, le son audible est émis continument ou de façon répétée au cours du temps par le moteur M1, par exemple pour signaler que le robot 1 est en attente d'une action spécifique de l'opérateur, comme la fourniture d'une pièce dans l'outil O ou encore que l'opérateur doit évacuer une zone d'espace autour du bras de robot B. Alors, le procédé de commande comporte en outre, postérieurement à l'étape 1006 :
- une étape 1008 de réception d'une commande d'acquittement de l'opérateur, par exemple au moyen du boîtier de commande manuelle 10, permettant par exemple à l'opérateur de signaler au robot 1 qu'il a bien pris connaissance du son audible ;
- et une étape 1010 d'interruption de l'émission du son audible, par l'unité centrale 2 qui génère un ordre d'interruption et l'envoie à la carte de contrôle 3, une fois que la commande d'acquittement est reçue. La carte de contrôle 3 cesse alors de superposer le signal d'excitation sonore SX avec le signal d'entrée CMD.

Avantageusement, le procédé de contrôle comporte, avant l'étape 998, une étape préalable 996 de génération automatique du fichier informatique d'excitation sonore FX à partir d'un fichier son source. Par exemple, le fichier son source est encodé dans un format numérique tel que le format MP3 ou WAV. La mise en oeuvre du procédé est ainsi facilitée, dans la mesure où des fichiers de son d'un tel format sont facilement disponibles et/ou éditables à partir d'outils courants.

Par exemple, lorsqu'un utilisateur fournit un fichier son source à l'unité centrale 2, celle-ci met automatiquement en oeuvre l'étape 996 en vue d'obtenir un fichier informatique d'excitation sonore FX correspondant. Un utilisateur du robot 1 peut ainsi personnaliser les sons audibles joués par le robot 1.

Cette étape 996 comporte avantageusement une opération de décodage numérique du fichier son source pour en décoder le contenu, de manière à créer le fichier informatique d'excitation sonore FX contenant le signal d'excitation sonore SX. Par exemple, un codec correspondant au format d'encodage du fichier son source est appliqué sur le fichier source numérique. Cette opération de décodage est par exemple effectuée par le calculateur numérique de l'unité centrale 2.

Avantageusement, l'étape 996 comporte en outre une opération d'échantillonnage du fichier son source avec une fréquence d'échantillonnage égale à la fréquence du régulateur 31, 32, 33 à l'entrée duquel le signal d'excitation sonore SX est destiné à être superposé. Plus précisément, le signal brut extrait du fichier son source est échantillonné, pour former le signal d'excitation sonore SX. En adaptant la fréquence d'échantillonnage avec la fréquence du régulateur 31, 32 ou 33 correspondant, la qualité de la restitution sonore est améliorée. On évite notamment une déformation du son, qui se produirait en cas de différence importante entre ces fréquences.

A titre illustratif, dans cet exemple, la fréquence de cadencement de la boucle de contrôle de courant est égale à 10 kHz. La fréquence d'échantillonnage est alors choisie égale à 10kHz. Cette opération d'échantillonnage est par exemple effectuée par l'unité de calcul de l'unité centrale 2.

Avantageusement, l'étape 996 comporte également une opération de conditionnement du signal extrait du fichier son source en vue de former le signal d'excitation sonore SX.

Cette opération de conditionnement contient avantageusement une correction de l'amplitude du signal extrait du fichier source numérique, pour que l'amplitude maximale de la valeur absolue du signal d'excitation sonore SX ainsi obtenu soit inférieure ou égale à 50% de l'amplitude maximale du signal d'entrée CMD et, de préférence, inférieure ou égale à 30 % de l'amplitude maximale du signal d'entrée CMD.

Cette opération de conditionnement comporte en outre une opération de filtrage du signal extrait, afin d'en éliminer les basses fréquences qui seraient susceptibles de perturber le fonctionnement du moteur M1. Par exemple, on élimine toutes les fréquences inférieures ou égales à 100 Hz ou, de préférence, inférieures ou égales à 50 Hz.

Encore plus avantageusement, opération de conditionnement comporte en outre l'application d'un filtre de premier ordre coupe-haut, de façon à améliorer la qualité du son audible émis par le moteur M1, plus particulièrement de façon à ce qu'il présente une qualité sonore analogue à celle générée par un transducteur de type haut-parleur. Par exemple, on élimine les composantes du signal d'excitation sonore SX ayant une fréquence supérieure ou égale à 10kHz ou supérieure ou égale à 5kHz. Avantageusement, plusieurs fichiers informatiques d'excitation sonore FX sont stockés dans la mémoire 30', contenant chacun un signal d'excitation sonore SX. Alors, lors de l'étape 1004, la carte de contrôle 3 choisit automatiquement le fichier informatique d'excitation sonore FX correspondant à l'ordre envoyé par l'unité centrale 2 parmi une pluralité de signaux sonores.

En variante, lors de l'étape 1002, l'ordre de superposer le signal d'excitation SX est généré en réponse à une action d'un utilisateur, par exemple sur le boîtier de commande manuelle 10. Ainsi, l'émission du son peut être déclenchée manuellement, indépendamment d'un programme de commande du bras de robot B exécuté automatiquement par l'unité centrale 2. Cela permet notamment de déclencher un son lors de phases de test ou d'apprentissage du robot 1.

Dans un deuxième mode de réalisation, le fichier informatique d'excitation sonore FX acquis lors de l'étape 998 est stocké dans la mémoire 20 de l'unité centrale 2. L'unité centrale 2 est en outre programmée pour, lors de l'étape 1004, extraire automatiquement le signal d'excitation sonore SX hors du fichier informatique d'excitation sonore FX, et pour le transmettre, au moyen du bus 100, vers l'unité de calcul 30 de la carte de contrôle 3 pour que celle-ci le superpose au signal d'entrée CMD de l'un des régulateurs 31, 32 ou 33.

Cette superposition est préférentiellement réalisée sur le point d'entrée 34 régulateur de position 31, car celle-ci présente une fréquence de cadencement plus faible compatible avec la fréquence de transmission de l'unité centrale 2 vers la carte de contrôle 3 dans son mode synchrone par le bus 100.

Par exemple, les valeurs échantillonnées du signal d'excitation sonore sont envoyées successivement l'une après l'autre vers l'unité de calcul 30 avec une fréquence égale à la fréquence du régulateur de position 31.

Dans ce cas, le fichier informatique d'excitation sonore FX a préalablement été échantillonné à la fréquence du régulateur de position 31, ici égale à 1kHz.

Ces dispositions permettent de simplifier la réalisation de la carte de contrôle 3, dans la mesure où la gestion du fichier informatique d'excitation sonore FX est assurée par l'unité centrale 2 et non pas par l'unité de calcul 30.

Mises à part ces différences, tout ce qui est décrit en référence au premier mode de réalisation s'applique au deuxième mode de réalisation.

Selon d'autres variantes, le nombre de régulateurs 31, 32, 33 peut être différent. En particulier, le régulateur de vitesse peut ne pas être implémenté.

En variante, la superposition du signal d'excitation sonore SX peut être réalisée avec le signal d'entrée d'un autre régulateur que celui de position ou de courant.

L'invention a été décrite dans des modes de réalisation qui présentent un point d'entrée des régulateurs en cascade correspondant aux points d'entrée des régulateurs de position 31 ou de courant 33. En variante, le point d'entrée peut être implémenté à d'autres niveaux du conditionnement de la consigne de commande des variateurs V1, V2, V3. Autrement dit, la superposition du signal d'excitation sonore SX peut se faire avec un signal d'entrée CMD correspondant à une étape de la régulation comprise entre la consigne de position jusqu'au signal de commande de l'étage d'amplification de puissance, ici des variateurs V1, V2, V3.

Les modes de réalisation et les variantes envisagés ci-dessus peuvent être combinés entre eux pour générer de nouveaux modes de réalisation.

## Revendications

1. Procédé de commande d'un robot (1) à usage industriel comprenant un bras de robot (B) mobile pourvu d'au moins un moteur électrique (M1, M2, M3) adapté pour mouvoir ce bras de robot (B) et pourvu d'un contrôleur de robot (6) comportant une unité centrale (2) et d'un contrôleur d'axe (3'), ce procédé comportant des étapes :
a) d'exécution (1000), par l'unité centrale (2), d'un programme de commande du bras de robot (B) et, en réponse, de calcul et d'envoi de consignes de position du bras de robot (B) ;
b) de génération (1004) de tensions d'alimentation dudit moteur par le contrôleur d'axe (3') en fonction des consignes de position calculées, en mettant en oeuvre des régulateurs (31, 32, 33) en cascade comportant au moins un point d'entrée (34, 35, 36) recevant un signal d'entrée (CMD) ;
c) de commande (1006) dudit moteur (M1, M2, M3) avec les tensions d'alimentation générées ;
**caractérisé en ce que**, lors de l'étape b), un signal d'excitation sonore (SX) est superposé, par le contrôleur de robot (6), avec le signal d'entrée (CMD) d'un des régulateurs (31, 32, 33) pour former un signal composite (CP), les tensions d'alimentation étant générées en fonction du signal composite (CP).

2. Procédé de commande selon la revendication 1, **caractérisé en ce que** le procédé comporte en outre, préalablement à l'étape b), une étape a') de génération (1002), d'un ordre de superposer le signal d'excitation sonore (SX) au signal d'entrée (CMD) d'un des régulateurs (31, 32, 33).

3. Procédé de commande selon l'une des revendications précédentes, **caractérisé en ce que** le procédé comporte une étape préalable z) d'acquisition (998), par le contrôleur de robot (6), d'un fichier informatique d'excitation sonore (FX) à l'intérieur duquel le signal d'excitation sonore (SX) est enregistré et **en ce que**, lors de l'étape b), le signal d'excitation sonore (SX) est automatiquement extrait (1004) hors du fichier informatique d'excitation sonore (FX).

4. Procédé de commande selon la revendication 3, **caractérisé en ce que**, lors de l'étape z), le fichier informatique d'excitation sonore (FX) acquis est stocké dans une mémoire (30') du contrôleur d'axe (3') et **en ce que** lors de l'étape b), le signal d'excitation sonore (SX) est superposé avec le signal d'entrée (CMD) du régulateur de courant (33) du contrôleur d'axe (3').

5. Procédé de commande selon la revendication 3, **caractérisé en ce que**, lors de l'étape z), le fichier informatique d'excitation sonore (FX) acquis est stocké dans une mémoire (20) de l'unité centrale (2) et **en ce que** lors de l'étape b), le signal d'excitation sonore (SX) est superposé avec le signal d'entrée (CMD) du régulateur de position (31) du contrôleur d'axe (3').

6. Procédé de commande selon une des revendications 3 à 5, **caractérisé en ce que** le procédé comporte en outre une étape préalable y) de génération (996) automatique du fichier informatique d'excitation sonore (FX) à partir d'un fichier son source.

7. Procédé de commande selon la revendication 6, **caractérisé en ce que** l'étape y) de génération du fichier informatique d'excitation sonore (FX) comporte une opération automatique de décodage numérique du fichier son source vers un format prédéfini pour former le fichier informatique d'excitation sonore (FX).

8. Procédé de commande selon la revendication 6 ou 7, **caractérisé en ce que** l'étape y) de génération du fichier informatique d'excitation sonore (FX) comporte une opération automatique d'échantillonnage du fichier son source à une fréquence d'échantillonnage égale à la fréquence du régulateur (31, 32, 33) à l'entrée duquel le signal d'excitation sonore (SX) est destiné à être superposé.

9. Procédé de commande selon l'une des revendications 6 à 8, **caractérisé en ce que** l'étape y) de génération du fichier informatique d'excitation sonore (FX) comporte une opération de correction automatique de l'amplitude du signal d'excitation sonore, pour adapter l'amplitude maximale de la valeur absolue du signal d'excitation sonore à des spécifications du point d'entrée recevant le signal d'entrée (CMD).

10. Procédé de commande selon la revendication 9, **caractérisé en ce que** l'étape y) de génération du fichier informatique d'excitation sonore (FX) comporte une opération de correction automatique de l'amplitude du signal d'excitation sonore, pour que l'amplitude maximale de la valeur absolue du signal d'excitation sonore soit inférieure ou égale à 50% ou à 30% de l'amplitude maximale du signal d'entrée (CMD).

11. Procédé de commande selon l'une quelconque des revendications précédentes, **caractérisé en ce que**, lors de l'étape c), le son audible est émis continument ou de façon répétée au cours du temps et **en ce que** le procédé comporte également des étapes :
d) de réception (1008) d'une commande d'acquittement,
d') d'interruption (1010) de l'émission du son audible, par l'unité de contrôle (6) du robot, une fois que la commande d'acquittement a été reçue.

12. Robot (1) à usage industriel comprenant :
- un bras de robot (B) mobile pourvu d'au moins un moteur électrique (M1, M2, M3) adapté pour mouvoir ce bras de robot (B) et
- un contrôleur de robot (6) comportant :
• une unité centrale (2), adaptée pour exécuter un programme de commande du bras de robot (B) et pour, en réponse, calculer et envoyer des consignes de position ;
• un contrôleur d'axe (3'), adapté pour générer des tensions d'alimentation dudit moteur en fonction des consignes de position calculées, en mettant en oeuvre des régulateurs (31, 32, 33) en cascade comportant au moins un point d'entrée (34, 35, 36) recevant un signal d'entrée (CMD) ;
**caractérisé en ce que** le contrôleur de robot (6) est configuré pour, lors de la génération des tensions d'alimentation, superposer un signal d'excitation sonore (SX) avec le signal d'entrée (CMD) d'un des régulateurs (31, 32, 33) pour former un signal composite (CP), les tensions d'alimentation étant générées en fonction du signal composite (CP).

## Patentansprüche

1. Verfahren zum Steuern eines Roboters (1) zur industriellen Nutzung, der einen beweglichen Roboterarm (B) aufweist, der mindestens mit einem für die Bewegung dieses Roboterarms (B) angepassten elektrischen Motor (M1, M2, M3) und mit einer Steuervorrichtung (6) versehen ist, der eine Zentraleinheit (2) und eine Achsensteuereinheit (3') aufweist, wobei dieses Verfahren die Schritte aufweist:
a) Ausführen (1000) eines Programms zur Steuerung des Roboterarms (B) durch die Zentraleinheit (2) und in Antwort zum Berechnen und Senden von Sollwerten der Position des Roboterarms (B);
b) Erzeugen (1004) von Spannungen für die Versorgung des Motors durch die Achsensteuereinheit (3') abhängig von den berechneten Positionssollwerten, wobei kaskadierte Regler (31, 32, 33) eingesetzt werden, die mindestens einen Eingangspunkt (34, 35, 36) aufweisen, der ein Eingangssignal (CMD) empfängt;
c) Steuern (1006) des Motors (M1, M2, M3) mit den erzeugten Versorgungsspannungen;
**dadurch gekennzeichnet, dass** bei dem Schritt b) durch die Steuervorrichtung (6) ein akustischen Erregungssignal (SX) dem Eingangssignal (CMD) eines der Regler (31, 32, 33) überlagert wird, um ein zusammengesetztes Signal (CP) zu bilden, wobei die Versorgungsspannungen abhängig von dem zusammengesetzten Signal (CP) erzeugt werden.

2. Steuerverfahren nach Anspruch 1, **dadurch gekennzeichnet, dass** das Verfahren außerdem vor dem Schritt b) einen Schritt a') (1002) zur Erzeugung eines Befehls zum Überlagern des akustischen Erregungssignals (SX) und des Eingangssignals (CMD) eines der Regler (31, 32, 33) aufweist.

3. Steuerverfahren nach einem der vorhergehenden Ansprüche, **dadurch gekennzeichnet, dass** das Verfahren einen vorausgehenden Schritt z) des Beschaffens (998) einer Computerdatei der akustischen Erregung (FX) durch die Steuervorrichtung (6) aufweist, in der das akustischen Erregungssignal (SX) protokolliert ist, und dass bei dem Schritt b) das akustischen Erregungssignal (SX) automatisch aus der Computerdatei der akustischen Erregung (FX) extrahiert (1004) wird.

4. Steuerverfahren nach Anspruch 3, **dadurch gekennzeichnet, dass** bei dem Schritt z) die beschaffte Schallerregungs-Computerdatei (FX) in einem Speicher (30') der Achsensteuereinheit (3') gespeichert wird, und dass bei dem Schritt b) das akustischen Erregungssignal (SX) dem Eingangssignal (CMD) des Reglers (33) des Stroms der Achsensteuereinheit (3') überlagert wird.

5. Steuerverfahren nach Anspruch 3, **dadurch gekennzeichnet, dass** bei dem Schritt z) die beschaffte Computerdatei (FX) der akustischen Erregung in einem Speicher (20) der Zentraleinheit (2) gespeichert wird, und dass bei dem Schritt b) das akustischen Erregungssignal (SX) dem Eingangssignal (CMD) des Reglers (31) der Position der Achsensteuereinheit (3') überlagert wird.

6. Steuerverfahren nach einem der Ansprüche 3 bis 5, **dadurch gekennzeichnet, dass** das Verfahren außerdem einen vorherigen Schritt y) des automatischen Erzeugens (996) der Computerdatei (FX) der akustischen Erregung aus einer Quellenaudiodatei aufweist.

7. Steuerverfahren nach Anspruch 6, **dadurch gekennzeichnet, dass** der Schritt y) zum Erzeugen der Datei der akustischen Erregung (FX) eine automatische Operation des numerischen Decodierens der Quellenaudiodatei in ein vorbestimmtes Format aufweist, um die Datei der akustischen Erregung (FX) zu bilden.

8. Steuerverfahren nach Anspruch 6 oder 7, **dadurch gekennzeichnet, dass** der Schritt y) des Erzeugens der Datei der akustischen Erregung (FX) eine automatische Operation des Abtastens der Quellenaudiodatei bei einer Abtastfrequenz gleich der Frequenz des Reglers (31, 32, 33), an dessen Eingang das akustischen Erregungssignal (SX) überlagert werden soll, aufweist.

9. Steuerverfahren nach einem der Ansprüche 6 bis 8, **dadurch gekennzeichnet, dass** der Schritt y) des Erzeugens der Datei der akustischen Erregung (FX) eine Operation der automatischen Korrektur der Amplitude des akustischen Erregungssignals aufweist, um die maximale Amplitude des Absolutwerts des akustischen Erregungssignals an Spezifikationen des Eingangspunkts, der das Eingangssignal (CMD) empfängt, anzupassen.

10. Steuerverfahren nach Anspruch 9, **dadurch gekennzeichnet, dass** der Schritt y) des Erzeugens der Datei der akustischen Erregung (FX) eine Operation der automatischen Korrektur der Amplitude des akustischen Erregungssignals aufweist, damit die maximale Amplitude des Absolutwerts des akustischen Erregungssignals kleiner oder gleich 50% oder 30% der maximalen Amplitude des Eingangssignals (CMD) beträgt.

11. Steuerverfahren nach einem beliebigen der vorhergehenden Ansprüche, **dadurch gekennzeichnet, dass** bei dem Schritt c) der hörbare Ton kontinuierlich oder wiederholt über die Zeit ausgesandt wird, und dass das Verfahren auch die Schritte umfasst:
d) des Empfangens (1008) eines Quittungssignals,
d') des Unterbrechens (1010) des Aussendens des hörbaren Tons durch die Steuervorrichtung (6) des Roboters sobald der Quittungsbefehl empfangen wurde.

12. Roboter (1) zur industriellen Nutzung, umfassend:
- einen beweglichen Roboterarm (B), der mit mindestens einem elektrischen Motor (M1, M2, M3) versehen ist, der angepasst ist, diesen Roboterarm (B) zu bewegen, und
- eine Robotersteuervorrichtung (6), umfassend:
• eine Zentraleinheit (2), die geeignet ist, ein Programm zur Steuerung des Roboterarms (B) und in Antwort zum Berechnen von Positionssollwerten und Senden derselben;
• eine Achsensteuereinheit (3'), die geeignet ist, Spannungen zum Versorgen des Motors abhängig von den berechneten Positionssollwerten zu erzeugen, wobei kaskadierte Regler (31, 32, 33) eingesetzt werden, die mindestens einen Eingangspunkt (34, 35, 36) aufweisen, der ein Eingangssignal (CMD) empfängt;
**dadurch gekennzeichnet, dass** die Robotersteuervorrichtung (6) ausgebildet ist, bei der Erzeugung der Versorgungsspannungen ein akustischen Erregungssignal (SX) dem Eingangssignal (CMD) eines der Regler (31, 32, 33) zu überlagern, um ein zusammengesetztes Signal (CP) zu erzeugen, wobei die Versorgungsspannungen abhängig von dem zusammengesetzten Signal (CP) erzeugt werden.

## Claims

1. A method for controlling an industrial robot (1) comprising a moving robot arm (B) provided with at least one electric motor (M1, M2, M3) suitable for moving this robot arm (B) and provided with a robot controller (6) including a central unit (2) and an axis controller (3'), this method including the following steps:
a) the execution (1000), by the central unit (2), of a control program of the robot arm (B) and, in response, the calculation and sending of position instructions of the robot arm (B);
b) generation (1004) of supply voltages of said motor by the axis controller (3') as a function of the calculated position instructions, using cascading regulators (31, 32, 33) including at least one input point (34, 35, 36) receiving an input signal (CMD);
c) controlling (1006) said motor (M1, M2, M3) with the generated supply voltages.
**characterized in that**, during step b), a sound excitation signal (SX) is superimposed, by the robot controller (6), with the input signal (CMD) of one of the regulators (31, 32, 33) to form a composite signal (CP), the supply voltages being generated as a function of the composite signal (CP).

2. The control method according to claim 1, **characterized in that** the method further includes, prior to step b), a step a') for generating (1002) an order to superimpose the sound excitation signal (SX) on the input signal (CMD) of one of the regulators (31, 32, 33).

3. The control method according to one of the preceding claims, **characterized in that** the method includes a prior step z) for acquisition (998), by the robot controller (6), of a sound excitation computer file (FX) within which the sound excitation signal (SX) is saved and, during step b), the sound excitation signal (SX) is automatically extracted (1004) from the sound excitation computer file (FX).

4. The control method according to claim 3, **characterized in that**, during step z), the acquired sound excitation computer file (FX) is stored in a memory (30') of the axis controller (3'), and **in that** during step b), the sound excitation signal (SX) is superimposed with the input signal (CMD) of a current regulator (33) of the axis controller (3').

5. The control method according to claim 3, **characterized in that**, during step z), the acquired sound excitation computer file (FX) is stored in a memory (20) of the central unit (2), and **in that** during step b), the sound excitation signal (SX) is superimposed with the input signal (CMD) of a position regulator (31) of the axis controller (3').

6. The control method according to one of claims 3 to 5, **characterized in that** the method further includes a prior step y) for the automatic generation (996) of the sound excitation computer file (FX) from a source sound file.

7. The control method according to claim 6, **characterized in that** step y) for generating the sound excitation computer file (FX) includes an automatic digital decoding operation of the source sound file to a predefined format to form the sound excitation computer file (FX).

8. The control method according to claim 6 or 7, **characterized in that** the step y) for generating the sound excitation computer file (FX) includes an automatic sampling operation of the source sound file at a sampling frequency equal to the frequency of the regulator (31, 32, 33) on the input of which the sound excitation signal (SX) is intended to be superimposed.

9. The control method according to one of claims 6 to 8, **characterized in that** step y) for generating the sound excitation computer file (FX) includes an operation for automatic correction of the amplitude of the sound excitation signal, to adapt the maximum amplitude of the absolute value of the sound excitation signal to specifications of the input point receiving the input signal (CMD).

10. The control method according to claim 9, **characterized in that** step y) for generating the sound excitation computer file (FX) includes an operation for automatic correction of the amplitude of the sound excitation signal, so that the maximum amplitude of the absolute value of the sound excitation signal is less than or equal to 50% or 30% of the maximum amplitude of the input signal (CMD).

11. The control method according to any one of the preceding claims, **characterized in that**, during step c), an audible sound is emitted continuously or repeatedly over time, and **in that** the method also includes the following steps:
d) receiving (1008) an acknowledgment command,
d') interrupting (1010) the emission of the audible sound, by the control unit (6) of the robot, once the acknowledgment command has been received.

12. An industrial robot (1), comprising:
- a moving robot arm (B) provided with at least one electric motor (M1, M2, M3) suitable for moving this robot arm (B), and
- a robot controller (6), including:
• a central unit (2), suitable for executing a program for commanding the robot arm (B) and, in response, calculating and sending position instructions;
• an axis controller (3'), suitable for generating supply voltages of said motor as a function of the calculated position instructions, using cascading regulators (31, 32, 33) including at least one input point (34, 35, 36) receiving an input signal (CMD);
**characterized in that** the robot controller (6) is configured, during the generation of the supply voltages, to superimpose a sound excitation signal (SX) with the input signal (CMD) of one of the regulators (31, 32, 33) to form a composite signal (CP), the supply voltages being generated as a function of the composite signal (CP).
